# EUROPÄISCHE PATENTANMELDUNG

(11) **EP 0 528 782 A2**
(43) Veröffentlichungstag der Anmeldung: **24.02.1993**
(21) Anmeldenummer: 92890152.9
(22) Anmeldetag: 22.06.1992
(51) Int. Cl.: B01D 46/16

(54) **Vorrichtung zum Entstauben von Gasen**

(30) Priorität: 14.08.1991 AT 1607/91
(71) Anmelder: VOEST-ALPINE KREMS FINALTECHNIK Gesellschaft m.b.H., A-3500 Krems (AT); Keuschnigg, Josef, Dipl.-Ing., A-8324 Kirchberg (Steiermark) (AT)
(72) Erfinder: Keuschnigg, Josef, Dipl.-Ing., A-8324 Kirchberg (Steiermark) (AT)
(74) Vertreter: Beer, Manfred, Dipl.-Ing.

(57) **Zusammenfassung**

Eine Vorrichtung zum Entstauben von beim Verbrennen von festen Abfallstoffen entstehenden Rauchgasen besitzt ein Gehäuse (1), in dem ein Rohgasraum (3) vorgesehen ist. Im Rohgasraum (3) sind mehrere Wirbelabscheider (10) vorgesehen, in deren Gehäuse (12) das Rohgas über einen tangentialen Rohgaseintritt (13) eintritt. Im Gehäuse (1) ist weiters ein Reingasraum (7) vorgesehen, der vom Rohgasraum (3) durch eine Trennwand (5) abgetrennt ist. Das Reingas strömt aus den Wirbelabscheidern (10) durch die Trennwand (5) durchsetzende Rohre (14) in den Reingasraum (7) ab. Die Wirbelabscheider (10) weisen jeweils ein von oben und ein von unten in die im Gehäuse (12) der Wirbelabscheider (10) vorgesehene Trennkammer (11) ragendes Tauchrohr (14, 15) auf. Der Rohgasraum (3) ist unten durch eine Trennwand (6) von einer Staubsammelkammer (17) abgetrennt. Die oberen und die unteren Tauchrohre (14, 15) sind mit der Öffnung (9) für den Reingasaustritt aus dem Gehäuse (1) der Vorrichtung verbunden.

## Beschreibung

Die Erfindung betrifft eine Vorrichtung zum Entstauben von Gasen, insbesondere von beim Verbrennen von festen Stoffen und Abfallstoffen entstehenden Rauchgasen, mit einem Gehäuse, in dem ein Rohgasraum vorgesehen ist, wobei im Rohgasraum mehrere Wirbelabscheider vorgesehen sind, in deren Gehäuse das Rohgas über einen tangentialen Rohgaseintritt eintritt, und mit einem Reingasraum, der vom Rohgasraum durch eine Trennwand abgetrennt ist, wobei Reingas aus den Wirbelabscheidern durch die Trennwand durchsetzende Rohre in den Reingasraum abströmt.

Eine derartige Vorrichtung ist aus der DE-OS 27 53 302 bekannt. Diese bekannte Vorrichtung ist insbesondere für das Abtrennen von Staub aus Rauchgasen bestimmt, weshalb sie zwischen einem Kessel und einem Saugzugventilator oder einem Kamin installiert ist. Die bekannte Vorrichtung besitzt ein Gehäuse mit einem Rohgasraum und einem darüberliegenden Reingaskanal, sowie einem unter dem Rohgasraum angeordneten Staubsammelraum. Weiters besitzt die bekannte Vorrichtung mehrere in Reihen hintereinander und nebeneinander bzw. stufenförmig, schräg übereinander angeordnete Wirbelabscheider. In diese Wirbelabscheider tritt das zu reinigende, insbesondere zu entstaubende Rohgas tangential ein und strömt als Reingas nach oben durch Rohre aus den Wirbelabscheidern in den Reingaskanal und aus diesem durch eine Austrittsöffnung aus der Vorrichtung ab. Die unteren Enden der Wirbelabscheider durchsetzen bei der aus der DE-OS 27 53 302 bekannten Vorrichtung die untere Begrenzungswand des Rohgasraumes und sind zu dem darunter angeordneten Staubsammelraum offen.

Aus der DE-OS 21 50 733 ist es bekannt, in Vorrichtungen zum Entstauben mehrere, kleine Zyklone anzuordnen.

Im Rahmen verschärfter Umweltschutzbestimmungen sind für Feuerungsanlagen und für andere staubbeladene Gase emittierende Vorrichtungen Entstaubungsanlagen mit hohen Abscheidungsgraden vorgeschrieben. Mit den bekannten Vorrichtungen ist es schwierig, die vorgeschriebenen Grenzwerte der Reststaubbeladung des aus den Vorrichtungen abströmenden Reingases einzuhalten.

Aus der EP-A 398 864 bzw. der AT-PS 392 924 sind Wirbelabscheider bekannt, bei welchen Reingas aus der Trennkammer über zwei in diese ragende und einander axial gegenüberliegende Tauchrohre abgeführt wird. Diese Abscheider mit zwei Tauchrohren (Abscheider mit Doppeltauchrohr) sind wesentlich leistungsfähiger als die z.B. in der DE-OS 27 53 302 vorgeschlagenen Wirbelabscheider.

Der Erfindung liegt die Aufgabe zugrunde, den Abscheidegrad von mechanischen Fliehkraftentstaubern des Wirbelabscheideprinzips so zu verbessern, daß die geforderten Grenzwerte der Staubbelastung des Reingases eingehalten werden können.

Diese Aufgabe wird erfindungsgemäß dadurch gelöst, daß die Wirbelabscheider jeweils ein von oben und ein von unten in den im Gehäuse der Wirbelabscheider vorgesehenen Trennraum ragendes Tauchrohr aufweisen, daß der Rohgasraum unten durch eine Trennwand von einer Staubsammelkammer abgetrennt ist und daß die oberen und die unteren Tauchrohre mit der Öffnung für den Reingasaustritt aus dem Gehäuse der Vorrichtung verbunden sind.

Vorteilhafte Ausgestaltungen der erfindungsgemäßen Vorrichtung sind Gegenstand der Unteransprüche.

Bei der erfindungsgemäßen Vorrichtung können die Wirbelabscheider parallel oder in Serie geschaltet sein, wobei auch Kombinationen dieser beiden Anordnungsmöglichkeiten denkbar sind.

Die erfindungsgemäß vorgeschlagene Verwendung von Wirbelabscheidern mit zwei Tauchrohren macht die erfindungsgemäße Vorrichtung wesentlich leistungsfähiger, so daß die oben geschilderten Ziele wirtschaftlicher gelöst werden können. Dies wird in erster Linie dadurch erreicht, daß durch das Doppeltauchrohrprinzip der erfindungsgemäß verwendeten Wirbelabscheider eine höhere Durchsatzleistung möglich ist als mit Zyklonen mit nur einem Tauchrohr, so daß in der Vorrichtung wesentlich weniger Abscheider eingebaut werden müssen.

In einer Ausführungsform der Erfindung ist am unteren, d.h. dem von unten in den Trennraum des Wirbelabscheiders ragenden Tauchrohr ein Abschirmkegel vorgesehen, der beispielsweise als kegelstumpfmantelförmiges Leitblech, das sich von unten nach oben verjüngt und mit seinem kleineren Ende am Tauchrohr befestigt ist, ausgebildet ist. Dadurch wird verhindert, daß im Bereich des unteren Tauchrohres, in welchem Bereich auch der Austritt für den abgetrennten Staub u.dgl. aus dem Wirbelabscheider vorgesehen ist Wirbel und Rückspüleffekte entstehen, die Staub aus dem Staubsammelraum zurück in das obere Tauchrohr und damit in den Reingasteil der Vorrichtung führen können.

Die Anzahl der bei der erfindungsgemäßen Vorrichtung eingesetzten Wirbelabscheider nach dem Doppeltauchrohrprinzip wird entsprechend der ermittelten Rohgasmenge so gewählt, daß je nach der geforderten Leistung der Vorrichtung eine entsprechende Anzahl von Wirbelabscheidern in Abhängigkeit von der zu behandelnden Rohgasmenge vorgesehen wird. Da durch das Doppeltauchrohrprinzip eine höhere Durchsatzleistung möglich ist als mit anderen, bekannten Wirbelabscheidern (Zyklonen) mit nur einem Tauchrohr, kann die Zahl der in den Vorrichtungen der eingangs genannten Gattung verwendeten Wirbelabscheider kleiner gehalten werden bzw. es kann mit querschnittskleineren Tauchrohren gearbeitet werden, was für den Trenngrad günstig ist.

Mit der erfindungsgemäßen Vorrichtung werden durch die Anordnung der zwei Tauchrohre auch kleinere Korngrößen wirksam abgeschieden. Durch die zwei Tauchrohre, die aus dem Trennraum der erfindungsgemäß verwendeten Wirbelabscheider nach außen geführt sind, bleibt die Leistung der erfindungsgemäßen Vorrichtung auch bei kleineren Tauchrohrquerschnitten gleich, so daß die Anzahl der Wirbelabscheider nicht erhöht werden muß und in der weiteren Folge keine Kostenerhöhungen entstehen. So ist es auch möglich, Wirbelabscheider mit Tauchrohren mit vergleichsweise kleinem Querschnitt einzusetzen, was den Abscheidegrad weiter verbessert.

In einer Ausführungsform der Erfindung kann der Rohgaskanal und der Staubsammelraum durch eine etwa horizontale Trennwand, und der Reingaskanal ebenso durch eine Trennwand geteilt sein, wobei im Boden des Rohgaskanals Öffnungen vorgesehen sind, die das untere Ende der einzelnen Wirbelabscheider der erfindungsgemäßen Vorrichtung aufnehmen. Die Gehäuse dieser Wirbelabscheider sind gegenüber der Trennwand abgedichtet.

Durch die obere Trennwand, die den Rohgasraum nach oben abschließt, werden die oberen Tauchrohre der Wirbelabscheider durchgeführt und sind gegenüber dieser Wand abgedichtet.

Das aus den unteren Tauchrohren aus den erfindungsgemäß eingesetzten Wirbelabscheidern abgeführte Reingas wird in einer Ausführungsform über Sammelkanäle (Reingaskanäle) abgeführt. Diese Maßnahme erlaubt es auch, daß die erfindungsgemäße Vorrichtung in bestehende Anlagen eingebaut wird.

Auch die äußere Form des Gehäuses der erfindungsgemäßen Vorrichtung kann so gestaltet werden, daß ein problemloser Einbau in bestehende Anlagen möglich ist, wobei auch die Berechnung derartiger Entstaubungsanlagen im wesentlichen beibehalten werden kann.

Aufgrund der erfindungsgemäßen Ausgestaltung der Vorrichtung können Entstaubungsgrade von 95 bis 98% erreicht werden. Derartige Entstaubungsgrade sind mit herkömmlichen mechanischen Fliehkraftentstaubern mit vergleichbarem wirtschaftlichem Einsatz nicht zu erreichen.

Die erfindungsgemäße Vorrichtung und deren Konstruktion erlaubt es auch, sie strömungsgünstig auszubilden. So ist gemäß der Erfindung beispielsweise vorgeschlagen, die Eintrittsspirale der erfindungsgemäß verwendeten Wirbelabscheider trompetenförmig auszubilden.

Bei der erfindungsgemäßen Vorrichtung strömt das Reingas aus jedem Wirbelabscheider über die zwei Tauchrohre nach oben bzw. nach unten ab. Das aus den nach oben gerichteten Tauchrohren strömende Reingas tritt beispielsweise unmittelbar in den Reingasraum ein. Das über die nach unten weisenden Tauchrohre abströmende Reingas, das etwa 50% des Reingases ausmacht, kann durch Sammelkanäle geleitet und über einen weiteren Kanal dem oberen Reingasraum zugeführt werden und durch diesen gemeinsam mit aus den oberen Tauchrohren abströmenden Reingas aus der Vorrichtung abströmen.

Es ist aber auch möglich, daß der obere Reingasraum über einen oder mehrere Kanäle zu dem (den) unteren Reingaskanäl (en) geführt wird und so mit diesem verbunden wird, so daß das Reingas über die unteren Reingaskanäle abgeführt werden kann.

Von Vorteil ist es bei der erfindungsgemäßen Vorrichtung, wenn der Staubsammelraum über eine Staubschleuse oder ein vergleichsweises dichtes Staubabschlußorgan gasdicht abgeschlossen ist, so daß sich im Staubsammelraum etwa der gleiche Unterdruck wie im Rohgasraum einstellt, so daß keine Rückflüsse zum Staubaustrittsspalt aus der Trennkammer der Wirbelabscheider, die bei der erfindungsgemäßen Vorrichtung verwendet werden, möglich sind.

Weitere Ausführungsformen von im Rahmen der Erfindung verwendbaren Doppeltauchrohrabscheider sind aus der EP-A-398864 bekannt. Diese Abscheider haben den Vorteil, daß sie gegenüber herkömmlichen Wirbelabscheidern mit geringeren Druckverlusten arbeiten.

Es ist bei der Erfindung auch möglich, die Austrittsöffnung für Reingas im Gehäuse der Vorrichtung zwischen dem oberen Reingasraum und den unteren Reingaskanälen anzuordnen.

Ein weiterer Vorteil bei der erfindungsgemäßen Vorrichtung ist es, daß die Gehäuse der Wirbelabscheider ohne Verbindung über die unteren Tauchrohre aufgesetzt werden können, so daß die Herstellung eines Trennkammergehäuses ähnlich wie die einzelnen Trennkammergehäuse bekannter Zyklone in wirtschaftlicher Weise verlaufen kann.

Durch Anbringen von Abdichtungselementen im Bereich der Durchtritte der Abscheider der erfindungsgemäßen Vorrichtung durch die Trennwände bzw. dem Boden des Roh- oder Reingaskanals stellt die erforderliche Abdichtung bei einwandfreier Verarbeitung und richtiger Einpassung der Abscheider keine Probleme dar.

Das Ableiten von Reingas über die unteren Tauchrohre der erfindungsgemäß verwendeten Wirbelabscheider stellt zwar zunächst einen zusätzlichen Aufwand dar, erhöht sich aber die Leistung des einzelnen Abscheiders und damit die der Vorrichtung insgesamt auf das doppelte, so daß sich insgesamt Vorteile und eine bessere Wirtschaftlichkeit der erfindungsgemäßen Vorrichtung ergeben.

Weitere Einzelheiten, Merkmale und Vorteile der Erfindung ergeben sich aus der nachstehenden Beschreibung des in den Zeichnungen gezeigten, bevorzugten Ausführungsbeispieles einer erfindungsgemäßen Vorrichtung.

Es zeigt:
Fig. 1 die Vorrichtung im Vertikalschnitt,
Fig. 2 die Vorrichtung aus Fig. 1 in einem zum Schnitt der Fig. 1 senkrechten Vertikalschnitt,

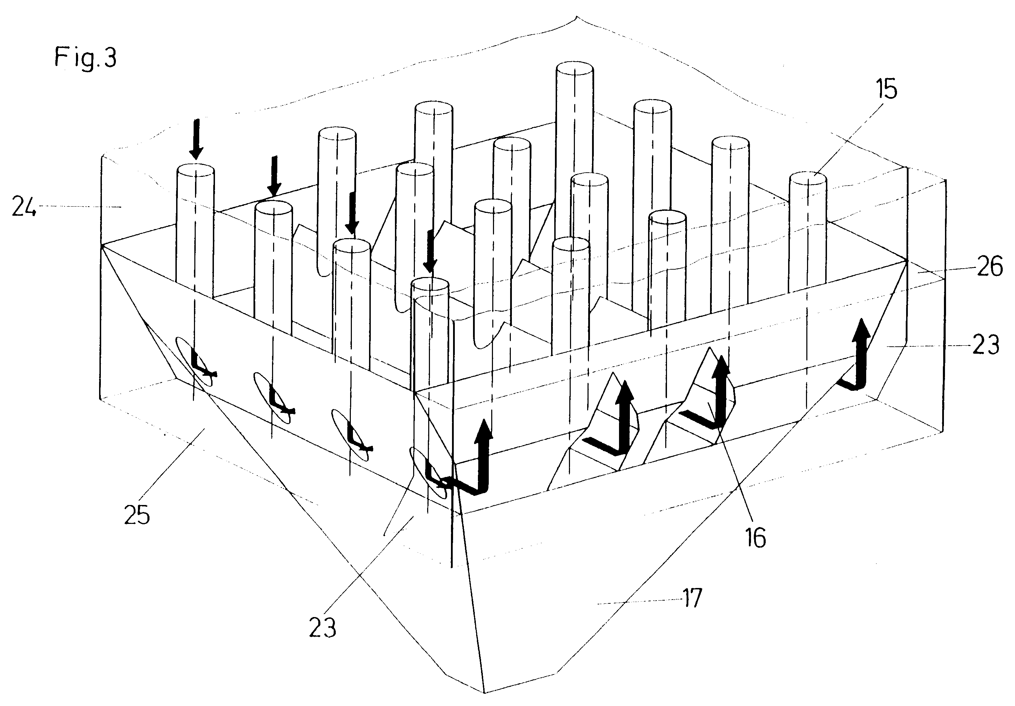

Fig. 3 in Schrägansicht eine Einzelheit des unteren Teils der Vorrichtung,
Fig. 4 den Einlauf eines Wirbelabscheiders, der in der Vorrichtung gemäß Fig. 1 verwendeten Bauart und
Fig. 5 einen Schnitt des Einlaufes gemäß Fig. 4.

Die Vorrichtung besitzt ein Gehäuse 1, das über Füße 2 am Boden steht.

Im Gehäuse 1 ist ein Raum 3 (Rohgasraum) vorgesehen, in den durch einen Einlaß 4 Rohgas einströmt. Der Raum 3 ist oben durch eine obere Abschlußwand 5 und unten durch eine untere Abschlußwand 6 abgeschlossen.

Oberhalb der oberen Abschlußwand 5 ist ein Reingasraum 7 vorgesehen, der nach oben hin durch eine obere Endwand 8 begrenzt ist.

Aus dem Reingasraum 7 strömt Reingas durch eine Austrittsöffnung 9 ab.

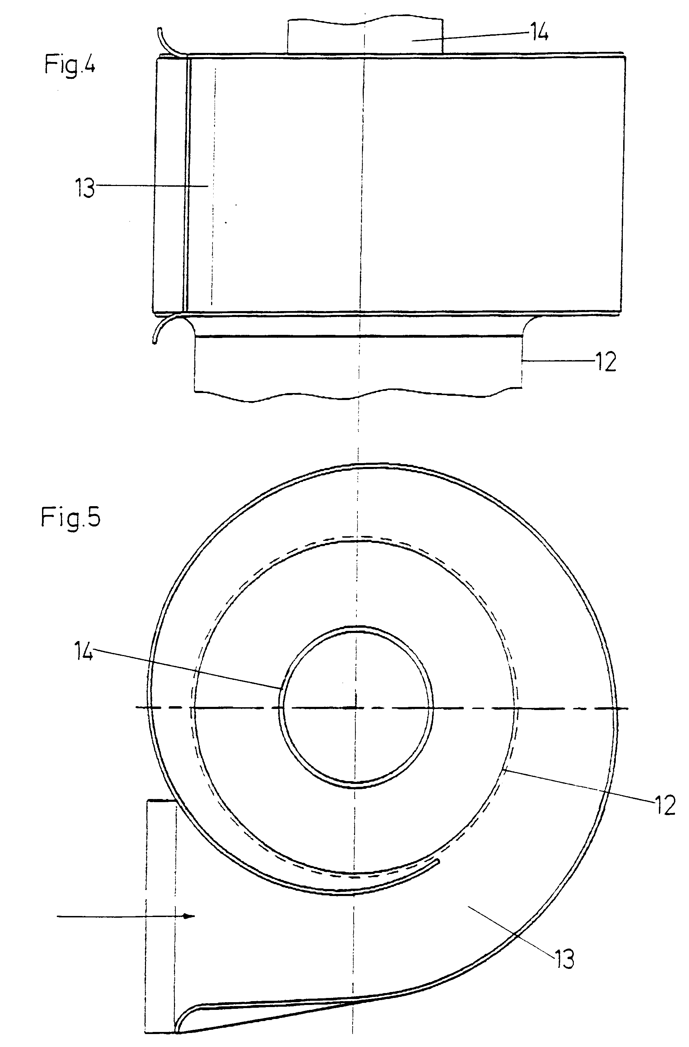

Im Raum 3 der erfindungsgemäßen Vorrichtung sind mehrere, lotrecht ausgerichtete Wirbelabscheider 10 vorgesehen. Jeder Wirbelabscheider 10 besitzt ein eine Trennkammer 11 begrenzendes, zylindermantelförmiges Gehäuse 12, wobei in die Trennkammer 11 Rohgas durch den in den Fig. 4 und 5 gezeigten Einlauf 13 einströmt. Wie die Fig. 4 und 5 zeigen, ist der Einlauf 13 spiralförmig und sich trompetenartig von außen nach innen verjüngend mit strömungsgünstig gestalteter Eintrittsöffnung ausgebildet.

Aus der Trennkammer 11 der Wirbelabscheider 10 führen Tauchrohre 14 und 15 heraus, durch die Reingas aus dem Wirbelabscheider 10 abströmt. Dabei durchsetzen die oberen Tauchrohre 14 der Wirbelabscheider 10 die obere Begrenzungswand 5 (gegebenenfalls unter Einfügung von Dichtungen), wogegen ein Teil der unteren Tauchrohre 15 in Reingassammelkanäle 16 mündet, die im unteren Teil des Gehäuses 1 horizontal ausgerichtet vorgesehen sind.

Durch den Einlauf 13 einströmendes Rohgas wird in eine Drehbewegung versetzt, wobei sich Staub und Gas in der Trennkammer 11 soweit voneinander trennen, daß der Staub an die Innenseite des Gehäuses 12 geschleudert wird und nach unten zu einem Austrittsspalt 19 wandert, aus dem er in einen Staubsammelraum 17 ausgetragen wird.

Am unteren Ende 18 des Staubsammelraumes 17 sind nicht gezeigte Staubablaufstutzen vorgesehen, die strömungsdicht geschlossen werden können, wozu beispielsweise eine Staubschleuse oder ein anderes verschließbares Staubabflußorgan vorgesehen werden kann.

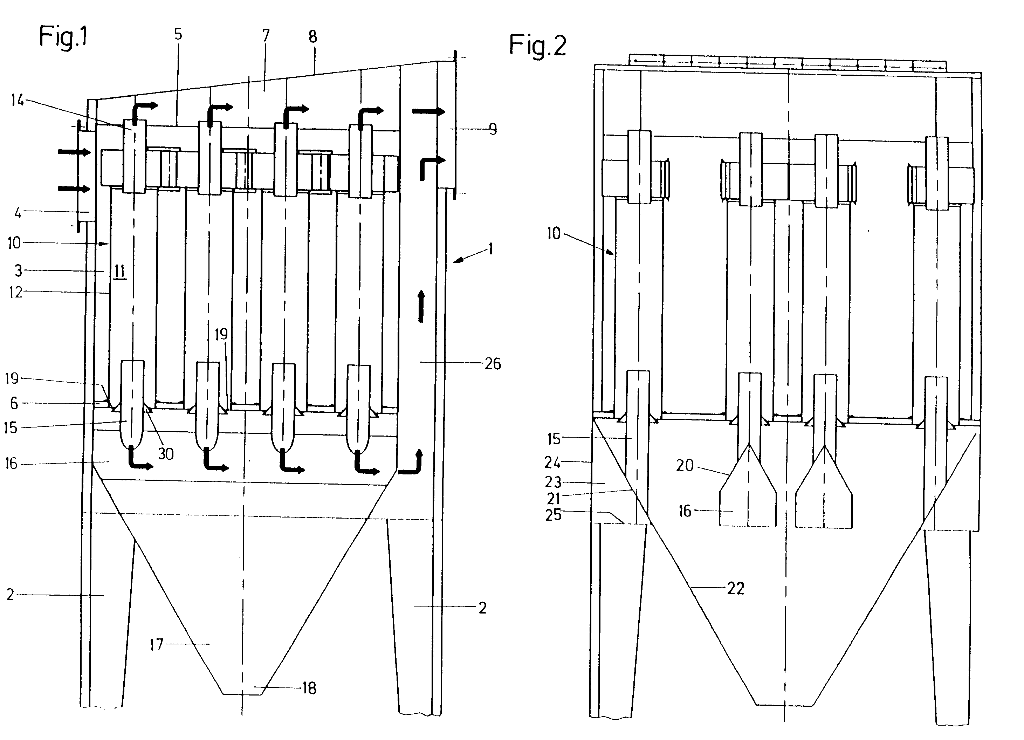

Wie insbesondere Fig. 2 zeigt, sind die oberen Begrenzungen 20 der Reingaskanäle 16 satteldachförmig ausgebildet, um zu verhindern, daß sich Staub auf ihnen ablagert bzw. allenfalls dort abgesetzter Staub in das untere Ende 18 des Staubsammeltrichters 17 abrutschen kann.

Wie ebenfalls Fig. 2 zu entnehmen, sind die unteren Tauchrohre 15 der im Gehäuse 1 bzw. dem Raum 3 randseitig angeordneten Wirbelabscheider 10 nicht an Reingaskanäle 16 angeschlossen, sondern stehen über Öffnungen 21 in der Wand 22 des Staubsammeltrichters 17 mit Kanälen 23, die vom unteren Bereich der Wand 24 des Gehäuses 1, dem oberen Teil der Wand 22 des Staubsammeltrichters 17 und einer unteren Abschlußwand 25 begrenzt werden, in Verbindung.

Aus den Reingaskanälen 16 strömt Reingas über einen entlang der Wand 24 des Gehäuses 1 nach oben geführten Verbindungskanal 26 in den oberen Reingasraum 7 und dann durch die Austrittsöffnung 9 aus der Vorrichtung ab.

Es ist noch darauf hinzuweisen, daß im Bereich der ringspaltförmigen Staubaustrittsöffnungen 19 der Wirbelabscheider 10, die mit ihren unteren Enden dichtend (gegebenenfalls unter Einfügung von Dichtungen) in entsprechende Öffnungen in der unteren Begrenzungswand 6 des Rohgasraumes 3 eingesetzt sind, kegelstumpfmantelförmige Leitbleche 30 vorgesehen sind.

Eine vorteilhafte Ausführungsform der erfindungsgemäßen Vorrichtung sieht vor, daß die unteren Tauchrohre 15 ausschließlich von den Reingaskanälen 16 bzw. der Wand 22 des Staubsammeltrichters 17 getragen werden, so daß sie mit den übrigen Teilen der Wirbelabscheider 10 körperlich nicht in Verbindung stehen.

## Patentansprüche

1. Vorrichtung zum Entstauben von Gasen, insbesondere von beim Verbrennen von festen Stoffen und Abfallstoffen entstehenden Rauchgasen, mit einem Gehäuse (1), in dem ein Rohgasraum (3) vorgesehen ist, wobei im Rohgasraum (3) mehrere Wirbelabscheider (10) vorgesehen sind, in deren Gehäuse (12) das Rohgas über einen tangentialen Rohgaseintritt (13) eintritt, und mit einem Reingasraum (7), der vom Rohgasraum (3) durch eine Trennwand (5) abgetrennt ist, wobei Reingas aus den Wirbelabscheidern (10) durch die Trennwand (5) durchsetzende Rohre (14) in den Reingasraum (7) abströmt, dadurch gekennzeichnet, daß die Wirbelabscheider (10) jeweils ein von oben und ein von unten in die im Gehäuse (12) der Wirbelabscheider (10) vorgesehene Trennkammer (11) ragendes Tauchrohr (14, 15) aufweisen, daß der Rohgasraum (3) unten durch eine Trennwand (6) von einer Staubsammelkammer (17) abgetrennt ist und daß die oberen und die unteren Tauchrohre (14, 15) mit der Öffnung (9) für den Reingasaustritt aus dem Gehäuse (1) der Vorrichtung verbunden sind.

2. Vorrichtung nach Anspruch 1, dadurch gekennzeichnet, daß in der unteren Begrenzungswand (6) des Rohgasraumes (3) Öffnungen vorgesehen sind, welche die unteren Enden der Gehäuse (12) der Wirbelabscheider (10) aufnehmen, wobei Austrittsöffnungen (19) für in den Wirbelabscheidern (10) abgeschiedenen Staub im Bereich der unteren Enden der Wirbelabscheider (10) vorgesehen sind, welche unmittelbar in die Staubsammelkammer (17) münden.

3. Vorrichtung nach Anspruch 2, dadurch gekennzeichnet, daß im Bereich der Austrittsöffnung (19) für in den Wirbelabscheidern (10) abgeschiedenen Staub sich nach oben verjüngende kegelstumpfmantelförmige Leitflächen (30) vorgesehen sind.

4. Vorrichtung nach einem der Ansprüche 1 bis 3, dadurch gekennzeichnet, daß die aus den Wirbelabscheidern (10) nach oben herausgeführten Tauchrohre (14) unmittelbar in den Reingasraum (7) münden.

5. Vorrichtung nach einem der Ansprüche 1 bis 4, dadurch gekennzeichnet, daß die unten aus den Wirbelabscheidern (10) herausführenden Tauchrohre (15) mit die Staubsammelkammer (17) durchsetzenden und mit dem Austritt (9) für Reingas aus dem Gehäuse (1) der Vorrichtung verbundenen Reingaskanälen (16) in Verbindung stehen.

6. Vorrichtung nach Anspruch 5, dadurch gekennzeichnet, daß mehrere unten aus den Abscheidern (10) herausgeführte untere Tauchrohre (15) an einen gemeinsamen Reingaskanal (16) angeschlossen sind.

7. Vorrichtung nach Anspruch 5 oder 6, dadurch gekennzeichnet, daß die Reingaskanäle (16) sich an ihrer Oberseite (20) satteldachartig verjüngend ausgebildet sind.

8. Vorrichtung nach einem der Ansprüche 1 bis 7, dadurch gekennzeichnet, daß die Staubsammelkammer (17) einen sich nach unten verjüngenden, trichterförmigen Abschnitt besitzt, an dessen unterem Ende (18) eine Staubentnahmeöffnung vorgesehen ist.

9. Vorrichtung nach Anspruch 8, dadurch gekennzeichnet, daß einige der nach unten aus den Wirbelabscheidern (10) herausgeführten Tauchrohre (15), insbesondere die von am Rande des Gehäuse (1) angeordneten Wirbelabscheidern (10) durch Öffnungen (21) im trichterförmigen Teil der Staubsammelkammer (17) aus dieser herausgeführt sind, wobei außerhalb des Trichters (17) und innerhalb des unteren Abschnittes der Gehäusewand (24) Kanäle (23) für das Abströmen von Reingas vorgesehen sind.

10. Vorrichtung nach einem der Ansprüche 1 bis 9, dadurch gekennzeichnet, daß die unteren Tauchrohre (15) ausschließlich über die Reingaskanäle (16) bzw. die Außenwand (24) der Staubsammelkammer (17), insbesondere deren trichterförmigen Abschnitt gehalten sind.

11. Vorrichtung nach einem der Ansprüche 1 bis 10, dadurch gekennzeichnet, daß die Reingaskanäle (16) und gegebenenfalls die zwischen der Wand (24) des Gehäuses (1) und dem vorzugsweise trichterförmigen Abschnitt (22) der Staubsammelkammer (17) vorgesehenen Kanäle (23) für Reingas über einen gemeinsamen Verbindungskanal (26) mit dem oberen Reingasraum (7) verbunden sind.

12. Vorrichtung nach einem der Ansprüche 1 bis 11, dadurch gekennzeichnet, daß wenigstens ein Teil der nach unten aus einem Wirbelabscheider (10) herausgeführten Tauchrohre (15) unmittelbar zum oberen Reingasraum (7) geführt ist und in diesen ausmündet.

13. Vorrichtung nach einem der Ansprüche 1 bis 12, dadurch gekennzeichnet, daß der Eintritt (13) in die Wirbelabscheider (10) spiralförmig und sich zur Eintrittsöffnung hin trompetenartig erweiternd, ausgebildet ist.

14. Vorrichtung nach einem der Ansprüche 1 bis 13, dadurch gekennzeichnet, daß die Öffnung (9) für den Austritt von Reingas aus dem Gehäuse (1) im oberen Bereich des Gehäuses (1) angeordnet ist.

15. Vorrichtung nach einem der Ansprüche 1 bis 13, dadurch gekennzeichnet, daß die Austrittsöffnung für Reingas aus dem Gehäuse (1) im unteren Bereich etwa in der Höhe der unteren Trennwand (6) des Rohgasraumes (3) vorgesehen ist.

16. Vorrichtung nach einem der Ansprüche 1 bis 15, dadurch gekennzeichnet, daß der Staubsammelraum (17) gasdicht verschlossen, gegebenenfalls mit einer Austragschleuse ausgestattet ist.
